(19) Europäisches Patentamt
European Patent Office
Office européen des brevets

(11) **EP 4 141 743 A1**

(12) **EUROPEAN PATENT APPLICATION**

(43) Date of publication:
**01.03.2023 Bulletin 2023/09**

(21) Application number: **21193429.4**

(22) Date of filing: **27.08.2021**

(51) International Patent Classification (IPC):
**G06N 3/04** (2006.01)   **G06N 3/08** (2006.01)
**G06N 20/20** (2019.01)

(52) Cooperative Patent Classification (CPC):
**G06N 3/045; G06N 3/082; G06N 20/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Frikha, Ahmed**
  **81549 München (DE)**
• **Chen, Haokun**
  **80809 München (DE)**
• **Krompaß, Denis**
  **81549 München (DE)**

(54) **COMPUTER-IMPLEMENTED METHOD FOR GENERATING A TRAINED MACHINE LEARNING MODEL**

(57)   The invention is directed to a Computer-implemented method for generating a trained machine learning model; wherein the generated trained machine learning model is applicable on any application data independent of a domain, comprising the steps: a. Providing a plurality of trained neural networks for classification (S1); wherein b. each trained neural network of the plurality of trained neural networks is trained on the basis of domain-specific labeled training data; wherein the domain-specific labeled training data comprises a plurality of data items which are each tagged with at least one label; c. Generating synthetic data using a data-free knowledge distillation method based on the plurality of trained neural networks (S2); wherein d. the synthetic data comprises a plurality of random data items which are each tagged with at least one label; e. Training a machine learning model based on the generated synthetic data (S3); f. Providing the generated trained machine learning model as output (S4).

Further, the invention relates to a corresponding computer program product and a corresponding technical system.

EP 4 141 743 A1

**Description**

1. Technical field

The present invention relates to a computer-implemented method for generating a trained machine learning model. Further, the invention relates to a corresponding computer program product and technical system.

2. Prior art

Artificial Intelligence ("AI") systems, such as machine learning models, are known from the prior art. The AI systems are software programs whose behavior is learned from data instead of being explicitly programmed. The learning process is called "training" which requires plenty of data and significant computational resources. Thereby, the trained AI system solves a specific task for which it was trained, such as prediction of system properties. Unlike conventional software, the learned behavior of the AI systems highly depends on the data including the parameters used during training, namely training data.

The performance of an AI system will be high when the training data is a representative sample of the data on which the AI system will be applied later in the field. However, in the real-world scenarios domain drifts or domain shifts are commonly encountered. Domain drift means that the distribution shifts between training and test or application data. It is common that a trained AI system performs well after training and that its performance degrades over time as in-field data increasingly differs from the original training data.

The domain generalization aims to incorporate knowledge from multiple source domains into a single machine learning model that could generalize well on unseen target domains and remains a challenging task.

Moreover, besides the domain drift, a set of data from the target domains is not always available. The data collection might be expensive or happens only gradually such as in a cold start situation which is typical for a new hospital or production site. The data collection might also be infeasible, e.g. collecting images from every street of every country in the context of autonomous cars. The target domains can also be unknown at the time of training and/or deployment.

A further barrier is that many stakeholders, such as business partners and customers, are reserved to share their data with the machine manufacturer or the service provider, hence prevent access to the source domain data.

Up to now, there is no established method that enables knowledge transfer while preserving data privacy. According to prior art, the data owner, such as the aforementioned customers, releases only a small subset of the owned data to the service provider. However, this prior art approach does not always work for the following reasons. On the one hand, the provided subset of the data does not necessarily cover the whole data distribution underlying the manufacturing. On the other hand, the provided subset of the data is too small and not sufficient to train data-hungry methods like deep neural networks.

It is therefore an objective of the invention to provide a computer-implemented method for generating a trained machine learning model in an efficient and a reliable manner.

3. Summary of the invention

This problem is according to one aspect of the invention solved by a computer-implemented method for generating a trained machine learning model; wherein the generated trained machine learning model is applicable on any application data independent of a domain, comprising the steps:

> a. Providing a plurality of trained neural networks for classification (S1); wherein

> b. each trained neural network of the plurality of trained neural networks is trained on the basis of domain-specific labeled training data; wherein the domain-specific labeled training data comprises a plurality of data items which are each tagged with at least one label;

> c. Generating synthetic data using a data-free knowledge distillation method based on the plurality of trained neural networks (S2); wherein

> d. the synthetic data comprises a plurality of random data items which are each tagged with at least one label;

> e. Training the machine learning model based on the generated synthetic data (S3);

> f. Providing the trained machine learning model as output (S4) .

Accordingly, the invention is directed to a computer-implemented method for generating a trained machine learning model. The trained machine learning model can be designed as any machine learning model, such as a supervised machine learning model in the form of a neural network. Alternatively, the machine learning models, namely the neural network as input and the trained machine learning model as output, can differ.

First, a plurality of neural networks for classification is provided as input. The classification can be directed to anomaly detection or any other multi-class classification task, such as the classification of different failure types of a manufacturing machine. Preferably, diverse neural networks from distinct domains or customers are provided, in order to identify and distill the domain-agnostic features that are useful for unknown domains. The trained neural networks can be received via an input interface of a computing unit or any other technical unit. The other data sets can also be transmitted bidirectionally via interfaces. The provided neural networks are trained on the basis of domain-specific labeled training data.

In other words, the method according to the invention does not need any access to the data of the different data domains, e.g. manufacturing scenarios (from different customers). Instead, the customers can provide the neural networks trained on their respective data. Hence, solely the neural networks are provided by the customers without any other private data. The advantage is that the data-privacy of the customers can be guaranteed.

Thereby, the training data is interpreted in the common sense in the context of supervised machine learning. The training data comprises a plurality of labeled data samples. The data samples can be equally referred to as data items. The data samples comprise one or more numerical features representing the respective data sample. Labeled data are data samples, wherein the data samples are tagged with one or more labels. Exemplary data samples are images, text files, time-series, sensor data etc. Referring to images, the numerical features are pixels.

In a second step, a data-free knowledge distillation method is applied on the provided trained neural networks to generate synthetic data. The resulting synthetic data can be interpreted as separate training data.

According to which, the domain-specific labeled training data can be equally referred to as first training data used for training the neural networks e.g. provided by the customers. The synthetic data can be equally referred to as second training data generated and used for training the machine learning model according to the invention. Thereby, this second machine learning model is independent or separate from the provided neural networks (first machine learning models).

The resulting trained machine learning model is outputted and is advantageously applicable on any application data independent of a domain, such as the aforementioned data domain.

The present invention provides a machine learning model which is able to generalize to unseen domains when applied in real-world scenarios involving strong domain shifts. The machine learning model generalizes better in unseen domains without fine-tuning compared to prior art. The challenging domain generalization problem is overcome.

In one aspect the generated trained machine learning model is a supervised or unsupervised machine learning model. Accordingly, the machine learning model can be designed as neural network, but alternatively as any other machine learning model. This allows for flexibility, e.g. the selection of the machine learning model can depend on the customer or application case.

In a further aspect the data-free knowledge distillation method is a method, selected from the group comprising: Deep-Inversion method and other data-free knowledge distillation methods; wherein the Deep-Inversion method optimizes the synthetic data by minimizing a weighted sum of different losses.

In a further aspect the step providing a plurality of trained neural networks for classification comprises receiving at least one trained neural network from each customer, customer site or domain of a plurality of customers, customer sites or domains respectively.

In a further aspect the method further comprises the step transmitting the generated trained machine learning model to a computing unit or a computing device, preferably an edge device for application. Accordingly, the machine learning model can be outputted and displayed on a display unit to e.g. the customer. Alternatively or additionally, the machine learning model can be stored, transmitted, deployed and/or applied.

Hence, the input data, data of intermediate method steps and/or resulting output data can be further handled. The output data is in particular the trained machine learning model. One or more actions can be performed. The action can be equally referred to as measure.

These actions can be performed by one or more technical units, such as computing unit or robot unit. The actions can be performed gradually or simultaneously. Actions include e.g. storing and processing steps. The advantage is that appropriate actions can be performed in a timely manner.

A further aspect of the invention is a computer program product directly loadable into an internal memory of a computer, comprising software code portions for performing the aforementioned method steps when said computer program product is running on a computer.

A further aspect of the invention is a technical system for performing the aforementioned method steps.

4. Short description of the drawings

In the following detailed description, presently preferred embodiments of the invention are further described with reference to the following figures:

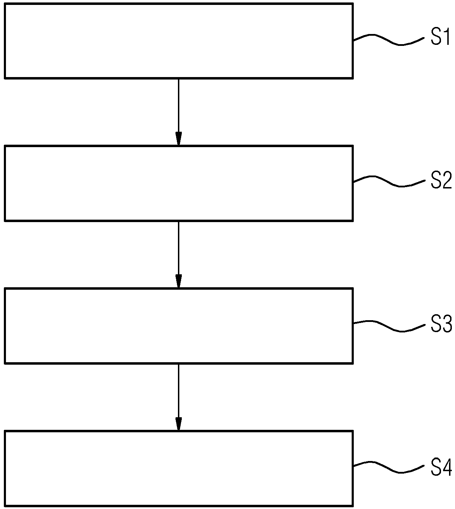

Fig. 1 illustrates a flowchart of the computer-implemented method according to the invention.

5. Detailed description of preferred embodiments

Figure 1 illustrates a flowchart of the method according to the invention with the method steps S1 to S4.

The provided neural networks in step S1 are trained on the original data sources, according to which they are trained on domain-specific data in a data privacy preserving manner, such as on the customer site. Hence, they cannot generalize well to data from other domains.

The knowledge from the trained neural networks is transformed and merged into a single model, namely the trained machine learning model, without using the original data. The trained machine learning model is provided in the last step S4.

The resulting trained machine learning model is a domain-agnostic model and generalizes better to unseen domains than the trained neural networks. The reason is that the trained machine learning model incorporates less domain-specific knowledge. Instead, it learns to extract more semantic features that advantageously allow the differentiation between the classes of the classification task, preferably in many domains.

Generating synthetic data using a data-free knowledge distillation method based on the plurality of trained neural networks

The synthetic data can be domain-agnostic synthetic data. The synthetic data comprises information about the task classes without belonging to one of the domains that the neural networks were trained on.

The synthetic data is generated in step S2. That means that each datapoint includes random values for feature and labels.

Thereafter, the features of every datapoint are optimized to facilitate domain generalization.

According to an embodiment the features of every datapoint are optimized to make all the neural networks correctly predict its label with a high certainty. Thereby, a datapoint whose label can be correctly predicted by many models from different domains should include semantic features about the class it belongs to and no features that belong to a single specific domain.

In more detail, according to an embodiment the Deep-Inversion method is used for the generation of the synthetic data. Alternatively, according to other embodiments, other data-free knowledge distillation methods can be applied, such as large-scale generative data-free distillation. The large-scale generative data-free distillation trains a generator model to generate synthetic data instead of optimizing synthetic data.

Deep-Inversion method

The Deep-Inversion method optimizes the synthetic data by minimizing a weighted sum of different losses:

1) a classification loss $L_{cls}$, e.g. cross-entropy,

2) total variation and L2-norm and

3) moment-matching loss $L_{BN}$, e.g., minimization of the 12-norm of the difference between the Batch Normalization (BN) statistics stored in the neural network (computed on original data) and those computed on the synthetically generated data.

The minimization of these losses ensures that the generated images are correctly classified by the neural network (loss 1), have smooth transitions between the colors (loss 2) and lead to a distribution of the features extracted by the neural network that is similar to the one of the original data.

According to prior art, the Deep-Inversion method was introduced for applications on image data, and thus its loss function includes loss terms that are specific for image data, such as loss 2. These additional loss functions can be used or omitted depending on the use-case or application.

They were omitted in the following algorithm according to an embodiment.

The generation of synthetic data enables the extraction and fusion of knowledge from different data domains (e.g. manufacturing machines) without accessing any raw original data from them.

The algorithm of the method according to an embodiment is illustrated in the pseudo code further below. According to this embodiment, each different manufacturing condition is a manufacturing machine with a different type, from which the data from domain D is recorded:

Pseudocode

1. Require m teacher models trained on the data of m different machine types
2. Require weighting coefficients $\alpha_i$ and $\beta_i$
3. Randomly initialize the synthetic datapoints $S=\{X, y\}$ where X and y represent the features and labels, respectively
4. while not converged
5. for each teacher model $\varphi_i$ do:
6. Feed S through $\varphi_i$ and compute the statistics $Z_i$ of the features at each batch normalization layer, yielding the predictions $o_i$
7. Compute the classification error $L_{cls,i}$ of the teacher model using
the labels y and the predictions $o_i$
8. Compute the moment matching error $L_{BN,i}$ of the teacher model using
the model statistics and those of the synthetic data $Z_i$
9. Compute the teacher-specific loss $L_i = L_{cls,i} + \alpha_i L_{BN,i}$
10. end for

11. Compute total loss $L_{total} = \sum_i^m \beta_i * L_i$
12. Update the synthetic data S to minimize the total loss $L_{total}$
13. end while
14. Randomly initialize the student model parameters $\theta$
15. Train the student model with the optimized synthetic data $S^*$ until convergence yielding the domain

agnostic model parameters $\theta^*$

According to another embodiment, the features of every datapoint are optimized in two steps. In a first stepa data-free knowledge distillation method, such as Deep Inversion, is applied on each domain-specific model separately, to generate domain-specific synthetic data. This step is equivalent to the data generation part according to the pseudocode with m=1 domain-specific model. Hereby, the pseudocode is is used for each model separately to generate synthetic domain-specific data. The output of this step comprises m different generated domain-specific datasets.

The second step is designed as generative method to facilitate the generation of cross-domain synthetic data, i.e. synthetic data that incorporates knowledge from two different domains. Let's consider the example of two domains A and B. This generation step uses the two provided models specific to the domains A and B, and the synthetic data specific to the domain B that was generated in the previous step. The output of this step is the synthetic data that contains knowledge about both domains, A and B. A pseudocode for this step can be depicted as follows:

Algorithm 2: Multi-teacher cross-domain image generation

**Input:** $T_A$, $T_B$: models specific to domains $D_A$, $D_B$,

$\hat{X}^B$: synthetic images specific to domain $D_B$

Output: $\hat{X}^{AB}_{cross}$ : Cross-domain synthetic images

1 Initialize $\hat{X}^{AB}_{cross}$ from standard Gaussian distribution $N(0,1)$

2 Feed $\hat{X}^B_{intra}$ through the model $T_A$ and compute the mean and variance of the input of each BN layer $i$

3 while not *converged* do

4 Feed $\hat{X}^{AB}_{cross}$ through $T_A$ and gather the mean and variance of the input of each BN layer $i$, as well as the predictions $p_A$

5 Feed $\hat{X}^{AB}_{cross}$ through $T_B$ and gather the predictions $p_B$

6 Update $\hat{X}^{AB}_{cross}$ by minimizing $L_{cross}$

**7 end**

In this generation step, first, a new set of datapoints is randomly initialized, e.g. from a standard Gaussian distribution (operation 1 in algorithm 2). Then, the synthetic data is optimized my minimizing the loss L_cross until convergence. The loss L_cross is related to the deep inversion loss. Is it a weighted sum of loss terms that includes the aforementioned total variation loss, the classification loss (such as cross entropy) and the moment matching loss. The major difference is that the moment matching loss is the difference between the statistics computed on the generated data (in operation 4 in algorithm 2) and the statistics computed using the synthetic data from step 1 specific to domain B when fed through the model specific to domain A (in operation 2 in algorithm 2). This modification leads to generating data that contains the knowledge that the model specific to domain A can extract when exposed to data describing domain B. The intention is that the cross-domain data generated incorporates features present in both domains A and B. Moreover, it should be noted that the classification loss minimizes the errors of the predictions p_A and p_B of both domain-specific models A (operation 4) and B (operation 5) on the cross-domain synthetic data. This means that the synthetic data is optimized so that both models A and B can classified correctly.

Training the machine learning model based on the generated synthetic data

The machine learning model, separate from the neural networks, is trained on the generated synthetic data to get a discriminative model that incorporates the domain-agnostic knowledge in the synthetic data and hence generalize well to unseen domains.

Data preprocessing for the application of the trained machine learning model on a new scenario

For the application, it is assumed that its data contains the same features as the data used to train the neural networks. In industrial manufacturing, these features are usually recorded using a reasonable set of sensors (including cameras), which measure for example the torques of the various axes in a milling machine and control deviations.
The data has to be annotated and can be pre-processed with the same pre-processing steps applied to the data used to train the neural networks.

Application of the trained machine learning model

The application can comprise the steps deploying the trained machine learning model in production mode, i.e. it makes directly predictions on the live data as follows: Pre-processing the live data from the new machine type $M_i$. Initializing the classifier model with the domain-agnostic parameters $\theta$ found during model Training (algorithm above). Predict class probabilities for the live data with the $\theta$ .

**Claims**

**1.** Computer-implemented method for generating a trained machine learning model; wherein the generated trained machine learning model is applicable on any application data independent of a domain, comprising the steps:

a. Providing a plurality of trained neural networks for classification (S1); wherein
b. each trained neural network of the plurality of trained neural networks is trained on the basis of domain-specific labeled training data; wherein the domain-specific labeled training data comprises a plurality of data items which are each tagged with at least one label;
c. Generating synthetic data using a data-free knowledge distillation method based on the plurality of trained neural networks (S2); wherein
d. the synthetic data comprises a plurality of random data items which are each tagged with at least one label;
e. Training the machine learning model based on the generated synthetic data (S3);
f. Providing the generated trained machine learning model as output (S4).

2. Computer-implemented method according to claim 1, wherein the generated trained machine learning model is a supervised or unsupervised machine learning model.

3. Computer-implemented method according to claim 1 or claim 2, wherein the data-free knowledge distillation method is a method, selected from the group comprising:

Deep-Inversion method and other data-free knowledge distillation methods; wherein the Deep-Inversion method optimizes the synthetic data by minimizing a weighted sum of different losses.

4. Computer-implemented method according to any of the preceding claims, wherein the step providing a plurality of trained neural networks for classification comprises receiving at least one trained neural network from each customer, customer site or domain of a plurality of customers, customer sites or domains respectively.

5. Computer-implemented method according to any of the preceding claims, wherein the method further comprises the step transmitting the generated trained machine learning model to a computing unit or a computing device, preferably an edge device for application.

6. A computer program product directly loadable into an internal memory of a computer, comprising software code portions for performing the steps according any of the preceding claims when said computer program product is running on a computer.

7. A technical system, configured for performing the steps according any of the claims 1 to 5.

**EP 4 141 743 A1**

| | Europäisches Patentamt / European Patent Office / Office européen des brevets | **EUROPEAN SEARCH REPORT** | Application Number |
|---|---|---|---|
| | | | **EP 21 19 3429** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/034985 A1 (VONGKULBHISAL JAYAKORN [JP] ET AL) 4 February 2021 (2021-02-04) * paragraphs [0038] - [0045], [0050] - [0055], [0068], [0075] - [0080], [0124], [0125]; figure 1 * ----- | 1-7 | INV. G06N3/04 G06N3/08 G06N20/20 |
| X | YUHANG LI ET AL: "Learning in School: Multi-teacher Knowledge Inversion for Data-Free Quantization", ARXIV.ORG, CORNELL UNIVERSITY LIBRARY, 201 OLIN LIBRARY CORNELL UNIVERSITY ITHACA, NY 14853, 19 November 2020 (2020-11-19), XP081817959, * sections 1, 4.1, 4.2 * ----- | 1-7 | |
| A | HONGXU YIN ET AL: "Dreaming to Distill: Data-free Knowledge Transfer via DeepInversion", ARXIV.ORG, CORNELL UNIVERSITY LIBRARY, 201 OLIN LIBRARY CORNELL UNIVERSITY ITHACA, NY 14853, 18 December 2019 (2019-12-18), XP081681466, * sections 3.1-3.3 * ----- | 1-7 | TECHNICAL FIELDS SEARCHED (IPC) G06N |
| A | LIN WANG ET AL: "Knowledge Distillation and Student-Teacher Learning for Visual Intelligence: A Review and New Outlooks", ARXIV.ORG, CORNELL UNIVERSITY LIBRARY, 201 OLIN LIBRARY CORNELL UNIVERSITY ITHACA, NY 14853, 17 June 2021 (2021-06-17), XP081974709, DOI: 10.1109/TPAMI.2021.3055564 * sections 5.1, 5.3 * ----- | 1-7 | |

The present search report has been drawn up for all claims

| Place of search | Date of completion of the search | Examiner |
|---|---|---|
| Munich | 10 February 2022 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

8

## ANNEX TO THE EUROPEAN SEARCH REPORT
## ON EUROPEAN PATENT APPLICATION NO.

EP 21 19 3429

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2022

| Patent document cited in search report | | Publication date | Patent family member(s) | | Publication date |
|---|---|---|---|---|---|
| US 2021034985 | A1 | 04-02-2021 | CN 113614738 | A | 05-11-2021 |
| | | | DE 112020000281 | T5 | 14-10-2021 |
| | | | GB 2598052 | A | 16-02-2022 |
| | | | US 2021034985 | A1 | 04-02-2021 |
| | | | WO 2020194077 | A1 | 01-10-2020 |